# EUROPEAN PATENT SPECIFICATION

(11) **EP 2 090 071 B1**
(45) Date of publication and mention of the grant of the patent: **07.07.2010**
(21) Application number: 07797871.6
(22) Date of filing: 30.05.2007
(51) Int. Cl.: H04L 29/06

(54) **BUNDLING OF MULTIMEDIA CONTENT AND DECODING MEANS**
BÜNDELUNG VON MULTIMEDIAINHALT UND DECODIERUNGSMITTELN
GROUPAGE DE CONTENU MULTIMÉDIA ET MOYEN DE DÉCODAGE

(30) Priority: 30.11.2006 US 867910 P; 11.01.2007 US 622024
(43) Date of publication of application: 19.08.2009
(73) Proprietor: Sony Ericsson Mobile Communications AB, 221 88 Lund (SE)
(72) Inventor: BLOEBAUM, L. Scott, Cary, NC 27519 (US)
(74) Representative: Aurell, Henrik
(86) International application number: PCT/US2007/069944
(87) International publication number: WO 2008/066958

(56) References cited:
- WO-A-01/31497
- WO-A-02/063494
- US-A1- 2002 194 227
- US-A1- 2005 132 264

## Description

### TECHNICAL FIELD OF THE INVENTION

The present invention relates to a method and system for bundling multimedia content with software components that enable the decoding and/or post-processing of the content to be rendered upon a plurality of electronic equipment.

### DESCRIPTION OF THE RELATED ART

Electronic equipment, such as, for example, communication devices, mobile phones, personal digital assistants, etc. are typically equipped to communicate via communication networks. Such electronic equipment are increasingly capable of supporting a wide range of audio, video, image and graphic formats for the decoding, playback and/or post-processing of multimedia content to be processed and/or rendered by the electronic equipment. Examples of such formats include MP3, AAC (and variants thereof), MPEG-4 Video, H.263, JPEG, etc. One or more "codecs" are generally used by electronic equipment to encode and/or decode multimedia content. A codec is a device or program capable of performing encoding and decoding on a digital data stream or signal. A codec may encode a signal or data stream for transmission, storage or encryption and decode and/or post-process it for rendering (e.g., listening, viewing, editing, etc.).

Given the difficulty to develop and standardize codecs that take into account all types of end-to-end communication network conditions, new codecs, and consequentially new formats, are added from a variety of sources when a need arises. For example, codecs motivating the support of the following formats are likely to be included in future electronic equipment: JPEG 2000, SVC, DivX, Ogg Video, H.264, Windows Media (WMA/WMV) and MPEG Lossless Audio. One drawback in supporting new multimedia codecs on electronic equipment is that each new codec generally requires additional resources from the manufacturer or supplier of the electronic equipment in order to integrate the desired feature functionality with optimal performance. With limited personnel and/or budget restrictions, this often results in time to market delays for products supporting such new multimedia features. Another drawback in supporting emerging multimedia codecs on electronic equipment is that prior to market introduction of these new multimedia features, there is often no existing mechanism on device that allows for rendering of content encoded in these emerging formats (e.g., JPEG 2000, SVC, DivX, Ogg Video, H.264, Windows Media (WMA/WMV) and MPEG Lossless Audio). Thus, the proliferation of emerging multimedia codecs is often hindered, particularly on the existing consumer base of electronic equipment.

Development of extendable multimedia hardware (HW) and software (SW) platforms is gathering pace as consumer demand grows for improved functionality of multimedia applications that motivate the use of digital imagery, video, audio, voice, and 2D/3D graphics on platforms as diverse as smartphones, portable audio and video media players as well as portable gaming consoles. These new classes of products require high-performance processing and high data throughput capabilities. Consequently, a variety of solutions are evolving, each designed to improve the integration and HW acceleration of desired multimedia functionality. Exemplary HW solutions include: general purpose processors with specific multimedia extensions, low level hardware accelerators, multiple processor architectures including DSPs and dedicated audio, video and graphic hardware subsystems, etc. Exemplary SW solutions include, but are not limited to, OpenMAX, OpenKODE, OpenSL ES, OpenVG, OpenGL ES, etc.

One of the challenges facing any emerging multimedia codec is the need to operate on an abundance of processor architectures and SW platforms. Even though high-level programming language compilers are available for specific HW architectures, it is rare for any emerging codec technology to fully exploit the full potential of a given HW and/or SW architecture. Consequently, large portions of the multimedia codecs are often written in a platform specific manner. Thus, the proliferation of an emerging codec technology to a number of multimedia hardware/software solutions means that the codec must often be rewritten and optimized for each new platform to which it is ported.

The effect of existing inefficiencies in HW platforms and software architectures supporting emerging multimedia functionalities is the delay in the introduction of new products, increases in development costs and reduction in product quality, which ultimately slows innovation in the multimedia domain at a time when market demand is growing.

Document WO 01/31497 discloses a method of receiving multimedia content and rendering the media component in a second format by the electronic device.

### SUMMARY

In view of the aforementioned shortcomings associated with the proliferation of multimedia formats and the difficulty in providing codecs for each multimedia format, there is a need in the art for a method of bundling full or partial decoding and/or post-processing mechanisms together with multimedia content. The combined file may be transmitted to another device that is able to execute the decoding and/or post-processing such that the receiving device can render the media file in an appropriate manner (e.g., playback of audio, display a picture, etc.) with sufficient fidelity.

One aspect of the present invention is directed to a method for receiving multimedia content by an electronic device, the method comprising: receiving multimedia content from an associated source; determining that the multimedia content includes a command component and a media component expressed in a first format.

Another aspect of the invention is directed to the electronic device being a mobile communications device.

Another aspect of the invention is directed to storing the media component in the first format in a non-volatile memory of the electronic device.

Another aspect of the invention is directed to processing the command component in the electronic device to transform the media component from the first format to a second format.

Another aspect of the invention is directed to storing the media component in the second format in a non-volatile memory of the electronic device.

Another aspect of the invention is directed to rendering the media component in the second format on the electronic device or outputting the media component in the second format by the electronic device to a second electronic device.

Another aspect of the invention is directed to the command component being a script file comprising at least one command specifying a processing step for transforming the media component from the first format to the second format.

Another aspect of the invention is directed to code representing an implementation of at least one element of a command is contained in the script file.

Another aspect of the invention is directed to the script file being in an Extensible Markup Language (XML) compatible format.

Another aspect of the invention is directed to step of determining that the multimedia content including a command component and a media component expressed in a first format comprises: extracting a sequence of one or more commands from the script file using an Extensible Markup Language (XML) parser; applying a command translator to translate the sequence of commands extracted from the script file into a sequence of one or more elements that can be interpreted by a multimedia framework in the electronic device.

Another aspect of the invention is directed to providing code included in the script file to an element plug-in receptacle of the multimedia framework if the script file includes code representing an implementation of at least one of the sequence of elements.

Another aspect of the invention is directed to the step of processing the command component further comprising the multimedia framework interpreting the sequence of one or more elements as a sequence of operations transforming the media component from the first format to the second format.

Another aspect of the invention is directed to the step of processing the command component further comprising the multimedia framework interpreting the sequence of one or more elements as a sequence of operations transforming the media component from the first format to the second format.

Another aspect of the invention is directed to including java-compatible code in the script file to an element plug-in receptacle of the multimedia framework for processing by a java parser and/or a java codec command translator for transforming the media component from first format to the second format.

One aspect of the present invention is directed to a method for transmitting multimedia content, the method comprising: transmitting a request for multimedia content from an electronic device to an associated source, wherein the request includes device dependent configuration information for rendering the multimedia content on the electronic device; receiving multimedia content from the associated source, wherein the multimedia content includes a command component and a media component expressed in a first format based at least in part on the device dependent configuration information provided in the request.

Another aspect of the invention is directed to the electronic device being a mobile communications device.

Another aspect of the invention is directed to the command component includes computer code to update the device dependent configuration information stored on the electronic device.

Another aspect of the invention is directed to processing the command component in the electronic device to transform the media component from the first format to a second format.

Another aspect of the invention is directed to determining that the multimedia content includes a command component and a media component expressed in a first format by: extracting a sequence of one or more commands from a script file in the command component using an Extensible Markup Language (XML) parser; applying a command translator to translate the sequence of commands extracted from the script file into a sequence of one or more elements that can be interpreted by a multimedia framework in the electronic device.

One aspect of the present invention is directed to a portable communications device comprising: a non-volatile memory; a multimedia stack having a plurality of multimedia codecs for processing multimedia content stored in the non-volatile memory, a processor operable to determine if multimedia content received by the mobile telephone includes a command component and a media component and processing the command component of the multimedia content in the portable communications device to transform the media component from a first format to a second format suitable for rendering on the portable communications device.

Other systems, devices, methods, features, and advantages of the present invention will be or become apparent to one having ordinary skill in the art upon examination of the following drawings and detailed description. It is intended that all such additional systems, methods, features, and advantages be included within this description, be within the scope of the present invention, and be protected by the accompanying claims.

It should be emphasized that the term "comprise/comprising" when used in this specification is taken to specify the presence of stated features, integers, steps or components but does not preclude the presence or addition of one or more other features, integers, steps, components or groups thereof."

The term "electronic equipment" includes portable radio communication equipment. The term "portable radio communication equipment", which herein after is referred to as a mobile radio terminal, includes all equipment such as mobile telephones, pagers, communicators, i.e., electronic organizers, personal digital assistants (PDA's), portable communication apparatus, smart phones or the like.

### BRIEF DESCRIPTION OF THE DRAWINGS

The foregoing and other embodiments of the invention are hereinafter discussed with reference to the drawings. The components in the drawings are not necessarily to scale, emphasis instead being placed upon clearly illustrating the principles of the present invention. Likewise, elements and features depicted in one drawing may be combined with elements and features depicted in additional drawings. Moreover, in the drawings, like reference numerals designate corresponding parts throughout the several views.
Figures 1 and 2 are exemplary schematic diagrams illustrating electronic equipment in accordance with aspects of the present invention.
Figure 3 is an exemplary multimedia stack in accordance with aspects of the present invention.
Figure 4 is schematic block diagram of an exemplary network in accordance with aspects of the present invention.
Figure 5 is a schematic block diagram of an exemplary server in accordance with aspects of the present invention.
Figure 6 is an exemplary multimedia content file in accordance with aspects of the present invention.
Figures 7 and 8 are exemplary methods in accordance with aspects of the present invention.

### DETAILED DESCRIPTION OF EMBODIMENTS

An aspect of the present invention is directed to a method and system of bundling full or partial decoding and/or post-processing mechanisms together with media content in the form of an electronic file. The combined file may be transmitted to another device that is able to execute the decoding and/or post-processing such that the receiving device can render the media content in an appropriate manner (e.g., playback of audio, display a picture, etc.) with sufficient fidelity. One aspect of the present invention extends the use of metadata associated with the a multimedia content to incorporate a specification for how the multimedia file should be decoded or partially decoded from a compressed state (e.g., MP3, JPEG, WAV, etc.) and post-processed into a state than can be rendered by a device or transmitted to another device for rendering. In one embodiment, the specification is in the form of a script comprising an ordered list of functions or primitives that are executed by the receiving device to transform the associated multimedia file into the desired content to be rendered. In one embodiment, the decoding instructions are provided as an element of an extensible markup language (XML) file. The XML file may accompany the multimedia file or the multimedia file may be another element of the XML file.

For maximum utility and operability, the processes specified in the script should be based on an open industry standard that can be implemented across multiple vendor's chipset and devices. One particularly well suited open standard is the Khronos OpenMax standard, which specifies a variety of multimedia application programming interfaces (APIs). Such APIs include for example: OpenMax Development Layer (DL), OpenMax Integration Layer (IL) and OpenMax Application Layer (AL). The functionality of each of these APIs will be discussed below. One of ordinary skill in the art will readily appreciate that while the OpenMax standard has been specifically mentioned and discussed, the present invention may be utilized in conjunction with other standards and/or protocols to obtain the functionality described herein.

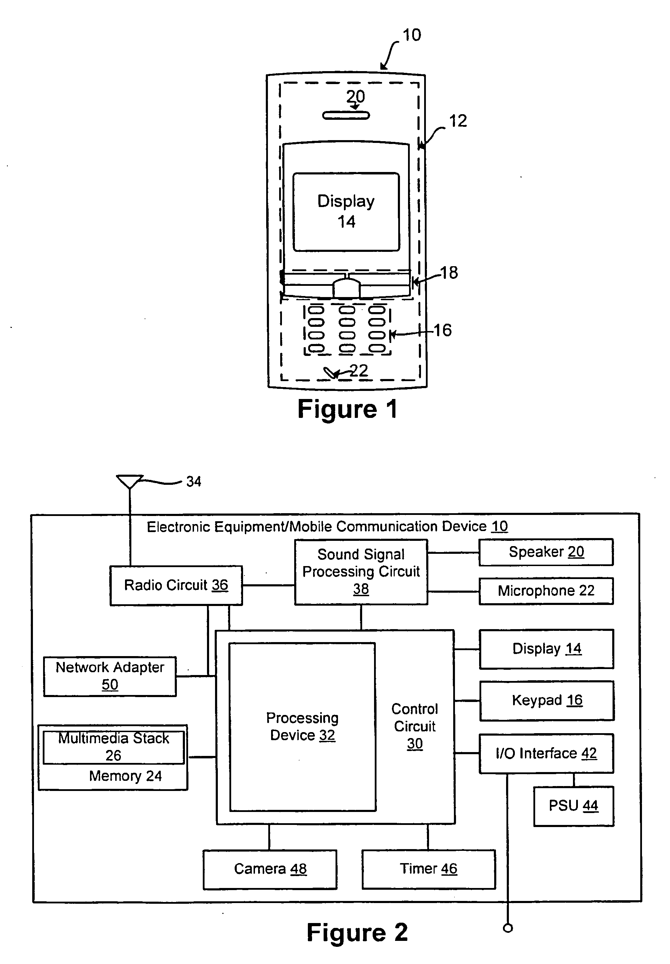

Referring to Figure 1, electronic equipment 10 is shown in accordance with one aspect of the present invention. The electronic equipment 10 in the exemplary embodiment is a mobile communications device and will be referred to as the mobile communications device 10. The mobile communications device 10 is shown as having a "brick" or "block" design type housing, but it will be appreciated that other type housings, such as clamshell housing or a slide-type housing, may be utilized without departing from the scope of the invention.

As illustrated in Figure 1, the mobile communications device 10 may include a user interface 12 (identified by dotted lines) that enables the user easily and efficiently to perform one or more communication tasks (e.g., identify a contact, select a contact, make a telephone call, receive a telephone call, request multimedia content from a remote server, etc). The user interface 12 of the mobile communications device 10 generally includes one or more of the following components: a display 14, an alphanumeric keypad 16, function keys 18, a navigation tool 19, a speaker 20, and/or a microphone 22.

The mobile communications device 10 includes a display 14. The display 14 displays information to a user such as operating state, time, telephone numbers, contact information, various navigational menus, status of one or more functions, etc., which enable the user to utilize the various features of the mobile communications device 10. The display 14 may also be used to visually display content accessible by the mobile communications device 10. The displayed content may include E-mail messages, audio and/or video presentations stored locally in memory 24 (Figure 2) of the mobile communications device 10 and/or stored remotely from the mobile communications device 10 (e.g., on a remote storage device, a mail server, remote personal computer, etc.). Such presentations may originate, be derived and/or downloaded from any source. For example, from multimedia files downloaded from a remote server, from multimedia files received through E-mail messages, including audio and/or video files, from a received mobile radio and/or television signal, etc. The audio component may be broadcast to the user with a speaker 20 of the mobile communications device 10. Alternatively, the audio component may be broadcast to the user though a headset speaker (not shown).

The mobile communications device 10 further includes a keypad 16 that provides for a variety of user input operations. For example, the keypad 16 may include alphanumeric keys for allowing entry of alphanumeric information such as user-friendly identification of contacts, user-friendly identification of contacts, E-mail addresses, distribution lists, telephone numbers, phone lists, contact information, notes, etc. In addition, the keypad 16 typically may include special function keys such as a "call send" key for transmitting an E-mail, initiating or answering a call, and a "call end" key for ending, or "hanging up" a call. Special function keys may also include menu navigation keys, for example, for navigating through a menu displayed on the display 14 to select different telephone functions, profiles, settings, etc., as is conventional. Other keys associated with the mobile communications device 10 may include a volume key, audio mute key, an on/off power key, a web browser launch key, an E-mail application launch key, a camera key, etc. Keys or key-like functionality may also be embodied as a touch screen associated with the display 14.

The mobile communications device 10 also includes conventional call circuitry that enables the mobile communications device 10 to establish a call, transmit and/or receive E-mail messages, and/or exchange signals with a called/calling device, typically another mobile communications device or landline telephone. However, the called/calling device need not be another telephone, but may be some other electronic device such as an Internet web server, E-mail server, content providing server, etc.

Referring to Figure 2, an exemplary functional block diagram of the mobile communications device 10 is illustrated. The mobile communications device 10 includes a primary control circuit 30 that is configured to carry out overall control of the functions and operations of the mobile communications device 10. The control circuit 30 may include a processing device 32, such as a CPU, microcontroller or microprocessor. The processing device 32 executes code stored in a memory (not shown) within the control circuit 30 and/or in a separate memory, such as memory 24, in order to carry out operation of the mobile communications device 10. The processing device 32 is generally operative to perform all of the functionality disclosed herein. For example, the processing device 32 is coupled to the storage element (e.g., memory 24) for decoding and/or post-processing received multimedia content. For example, when the received multimedia content is in the form of a file that includes metadata having decoding instructions and multimedia data information for rendering on the mobile communications device 10, the memory 24 includes a suitable multimedia stack 26 for processing the decoding instructions and rendering the multimedia content. The memory 24 may be, for example, a buffer, a flash memory, a hard drive, a removable media, or some other type of volatile and/or a non-volatile memory. In addition, the processing device 32 executes code to carry out various functions of the mobile communications device 10.

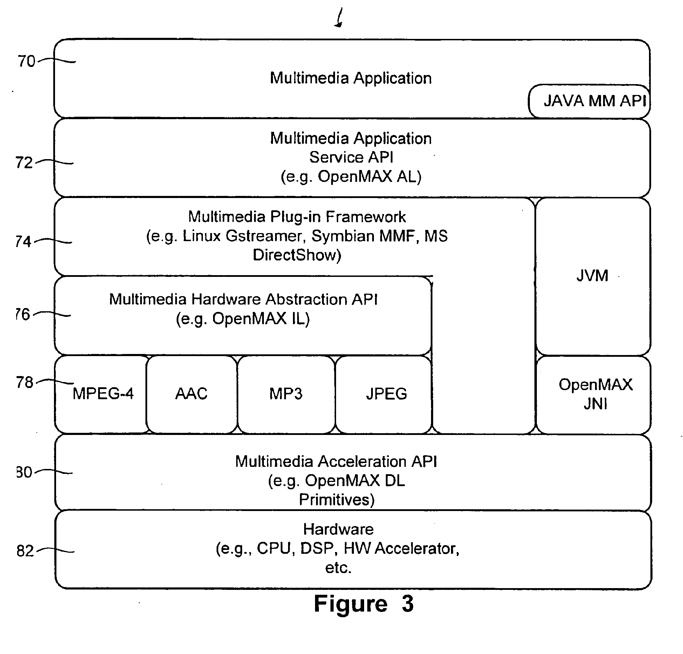

An exemplary multimedia stack 26 is illustrated in Figure 3. The multimedia stack may be resident in memory 24. As used herein, the phrase "multimedia stack" means a set of system programs, a set of application programs or a set of functions performed in firmware, hardware and/or software that form a system. The multimedia stack 26 may be implemented solely in software, firmware, hardware and/or any combination thereof.

Except as described herein, the multimedia stack 26 is a conventional software stack. Referring to Figure 3, the multimedia stack 26 includes following layers: multimedia application layer 70, multimedia application service API 72, multimedia plug-in framework 74, multimedia hardware abstraction API 76, protocol layer 78, multimedia acceleration API 80, and hardware layer 82.

The multimedia application layer 70 provides a means for the user to access multimedia information on the mobile communications device 10 and/or a remote source (e.g. a server) through a software application. The multimedia application layer is the main interface for the user(s) to interact with the application and multimedia content. Some examples of multimedia applications are Java Multimedia API (as shown in Figure 3), Symbian client level APIs, Linux Gstreamer client level APIs, etc.

The multimedia application service API layer 72 defines a set of APIs providing a standardized interface between an application and multimedia middleware where multimedia middleware provides the services needed to perform expected API functionality. The multimedia application service API layer 72 provides application portability with regards to the multimedia interface.

The multimedia plug-in framework layer 74 generally controls all media playback on the mobile communications device 10. Layer 74 interfaces with creates a "plug-in graph" using the plug-ins available to the system, and controls playback on a low level. The multimedia plug-in framework layer 74 includes plug-ins that might include an extensible markup language (XML) parser and/or XML codec command translator in which a set of scripted commands or instruction based on an open protocol (e.g., OpenMAX IL) calls and open primitives (e.g., OpenMAX DL primitives) are parsed and translated for execution in order to effectively build the desired decoding and/or post-processing functionality to playback multimedia content with which they were combined. Another embodiment of the present invention allows the Java multimedia framework associated within the Java Virtual Machine (JVM) to include a XML parser and/or XML codec command translator to work in a similar fashion as described above with respect to use in an open protocol.

The multimedia hardware abstraction API layer 76 serves as a low-level interface for audio, video, and imaging codecs used in the mobile communications device 10. Layer 76 provides applications and media frameworks the ability to interface with multimedia codecs and supporting components (e.g., sources and sinks) in a unified manner. The codecs themselves may be any combination of hardware or software and are completely transparent to the user. Without a standardized interface of this nature, codec vendors must write to proprietary or closed interfaces to integrate into mobile devices. A goal of the multimedia hardware abstraction API layer 76 is to provide codecs a degree of system abstraction to combat the problem of portability among many vastly different media systems.

As shown in Figure 3, java code may also be implanted in the software stack 26. For example, a java virtual machine (JVM) may interface between the multimedia application service API layer 72 and the protocol layer 78 to provide the necessary data and/or functionality to implement java-enabled code.

The protocol layer 78 includes a wide range of video and/or audio codecs. In addition image and sound libraries may also be included in the protocol layer 78. Exemplary codecs include: MPEG-4, AAC, MP3, JPEG, OpenMAX JNI, etc.

The multimedia acceleration API layer 80 defines an API which contains a comprehensive set of audio, video and imaging functions that can be implemented and optimized to code a wide range of codec functionality. Layer 80 generally includes audio signal processing functions such as FFTs and filters, imaging processing primitives such as color space conversion and video processing primitives to enable the optimized implementation of codecs such as MPEG-4, H.264, MP3, AAC and JPEG. The multimedia acceleration API 80 supports acceleration concurrency via both iDL, which uses OpenMAX IL constructs, and aDL which adds asynchronous interfaces to the OpenMAX DL API.

The hardware layer 82 generally performs services requested by the multimedia acceleration API layer 80. The hardware layer 82 generally specifies electrical specifications, collision control and other low-level functions of the multimedia stack 26.

Referring back to Figures 1 and 2, the mobile communications device 10 includes an antenna 34 coupled to a radio circuit 36. The radio circuit 36 includes a radio frequency transmitter and receiver for transmitting and receiving signals via the antenna 34 as is conventional. The mobile communications device 10 generally utilizes the radio circuit 36 and antenna 34 for voice, Internet and/or E-mail communications over a cellular telephone network. The mobile communications device 10 further includes a sound signal processing circuit 38 for processing the audio signal transmitted by/received from the radio circuit 36. Coupled to the sound processing circuit 38 are the speaker 20 and a microphone 22 that enable a user to listen and speak via the mobile communications device 10 as is conventional. The radio circuit 36 and sound processing circuit 38 are each coupled to the control circuit 30 so as to carry out overall operation.

The mobile communications device 10 also includes the aforementioned display 14 and keypad 16 coupled to the control circuit 30. The mobile communications device 10 further includes an I/O interface 42. The I/O interface 42 may be in the form of typical mobile communications device I/O interfaces, such as a multi-element connector at the base of the mobile communications device 10. As is typical, the I/O interface 42 may be used to couple the mobile communications device 10 to a battery charger to charge a power supply unit (PSU) 44 within the mobile communications device 10. In addition, or in the alternative, the I/O interface 42 may serve to connect the mobile communications device 10 to a wired personal hands-free adaptor, to a personal computer or other device via a data cable, etc. The mobile communications device 10 may also include a timer 46 for carrying out timing functions. Such functions may include timing the durations of calls, generating the content of time and date stamps, etc.

The mobile communications device 10 may include various built-in accessories, such as a camera 48 for taking digital pictures. Image files corresponding to the pictures may be stored in the memory 24. In one embodiment, the mobile communications device 10 also may include a position data receiver (not shown), such as a global positioning satellite (GPS) receiver, Galileo satellite system receiver or the like.

The mobile communications device 10 may also include one or more wireless network adapters 50 for establishing wireless communications with one or more remote devices. The wireless network adapter 50 may be any suitable wireless network adapter. For example, wireless network adapter 50 may be a wireless local area network (WLAN) adapter, a Bluetooth adapter, a near field communication adapter, etc. In one embodiment, the wireless network adapter 50 is WLAN adapter that enables mobile communications device 10 to communicate with other nearby WLAN-equipped devices or WLAN access points. Preferably, the WLAN adapter 50 is compatible with one or more IEEE 802.11 protocols (e.g., 802.11(a), 802.11(b) and/or 802.11(g), etc.) and allows the mobile communications device 10 to acquire a unique address (e.g., IP address) on the WLAN and communicate with one or more devices on the WLAN and fixed local network and/or other devices located remotely from the WLAN (e.g., remote computers, mobile phones, etc.) using one or more protocols (e.g., Internet Protocol, VoIP, SMP, IM, etc.), assuming the user has the appropriate privileges and/or has been properly authenticated.

Among the one or more wireless network adapters, the mobile communications device 10 may also include one or more wireless wide-area network (WWAN) adapters that enable the mobile communications device 10 to communicate with compatible wide-area WWAN's based on technologies such as 2G or 3G cellular, WiMax, WiBro, or the like. The WWAN may include or be communicably coupled to a server or servers for managing calls, Internet access and/or E-mails placed by and/or destined to the mobile communications device 10, transmitting multimedia content (e.g., image files, audio files, video files, etc.) to and/or from the mobile communications device 10 and carrying out any other support functions. The server generally communicates with the mobile communications device 10 via a network and a transmission medium. The transmission medium may be any appropriate device or assembly, including, for example, a communications tower, another mobile communications device, a wireless access point, a satellite, etc. Portions of the network may include wireless transmission pathways.

The mobile telephone 10 may also be configured to operate in a wide area communications system (e.g. 3G, GPRS). The system can include a server or servers for managing calls, Internet access and/or E-mails placed by and/or destined to the mobile telephone 10, transmitting multimedia content (e.g., image files, audio files, video files, etc.) to and/or from the mobile telephone 10 and carrying out any other support functions. The server generally communicates with the mobile telephone 10 via a network and a transmission medium. The transmission medium may be any appropriate device or assembly, including, for example, a communications tower, another mobile telephone, a wireless access point, a satellite, etc. Portions of the network may include wireless transmission pathways.

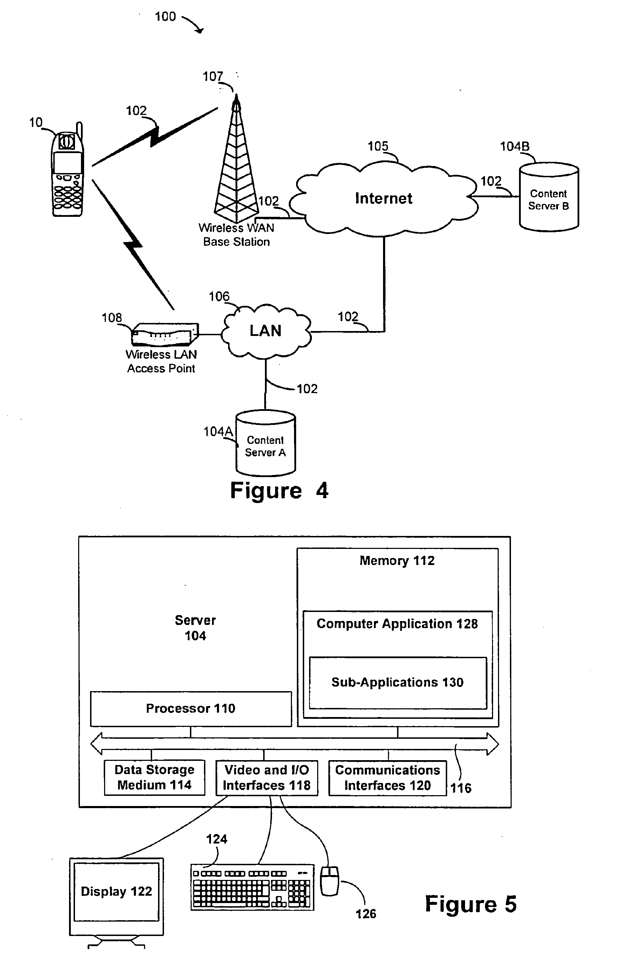

An exemplary network 100 in accordance with the present invention is illustrated in Figure 4. The network 100 may include one or more communication media 102, one or more content servers 104 (e.g., 104A, 104B), wide area network (WAN) 105 (e.g., Internet), a local area network (LAN) 106, at least one wireless LAN access point (AP) 108, a WAN base station 107, and a mobile communications device 10. Although the content server 104A is shown as being outside of the LAN 106, this is for illustrative purposes only. One of ordinary skill in the art will readily appreciate that the content server 104A may be located within the LAN 106 depending on the specific network topology. One of ordinary skill in the art will also appreciate that the exemplary LAN 106 may be a wireless local area network, a wide area network, personal-area access technology (e.g., wireless local area network, cellular network, WiMax, ultra wideband network, etc.) and/or a public network (e.g., the Internet)..

The communication media 102 can take the form of any medium that permits electronic devices to exchange information or data. For instance, the communication media 102 may be a wired communications medium, such as Ethernet or a wireless communications medium, such as IEEE 802.11(a), 802.11(b) or 802.11(g). In addition, the communication media 102 may also be a combination of wired and wireless communication mediums, as illustrated in Figure 4. One of ordinary skill in the art will readily appreciate that any communications medium allowing the functionality described herein shall be deemed to be within the scope of the present invention. Preferably the communications medium 12 can support a variety of network protocols including, for example, TCP/IP, UPnP, and the like.

As shown in Figure 4, the mobile communications device 10 may receive multimedia content from content server 104A from the access point 108. In addition, the mobile communications device 10 may receive network-based content from content server 104B through the Internet 105 and the base station 107 and/or through the LAN 106 and the access point 108. One of ordinary skill will readily appreciate that the mobile communications device 10 may receive multimedia content from any source in which the device 10 is operable to communicate. Likewise, communication media 102 may take any suitable form to achieve the desired functionality described herein.

Figure 5 illustrates a schematic block diagram of an exemplary content server 104 (e.g., content server A, content server B, etc.). The content server 104 may be any type of server. Preferably, the content server 104 is a media server that is compatible with protocols developed by the Internet Engineering Task Force (IETF) including IP, TCP, UDP, RTP, HTTP and the like. The content server 104 generally includes a processor 110, a memory 112, a data storage medium 114, a local interface 116, video and input/output interfaces 118, and various communication interfaces 120. The content server 104 may include optionally a display 122, a keyboard 124, and a user input device 126 (e.g., a computer mouse).

In one embodiment, the content server 104 includes a data storage medium 114 that stores multimedia content. The multimedia content may be stored in the data storage medium 114 or a remote storage medium (not shown) that is communicatively coupled to the content server 104. As stated above, the multimedia content may take any form (e.g., audio, video, photographs, and the like) and may be stored in any suitable format (e.g., MPEG, AVI, MP3, JPG, TIFF, and the like). The multimedia content may be stored in a compressed and/or uncompressed state.

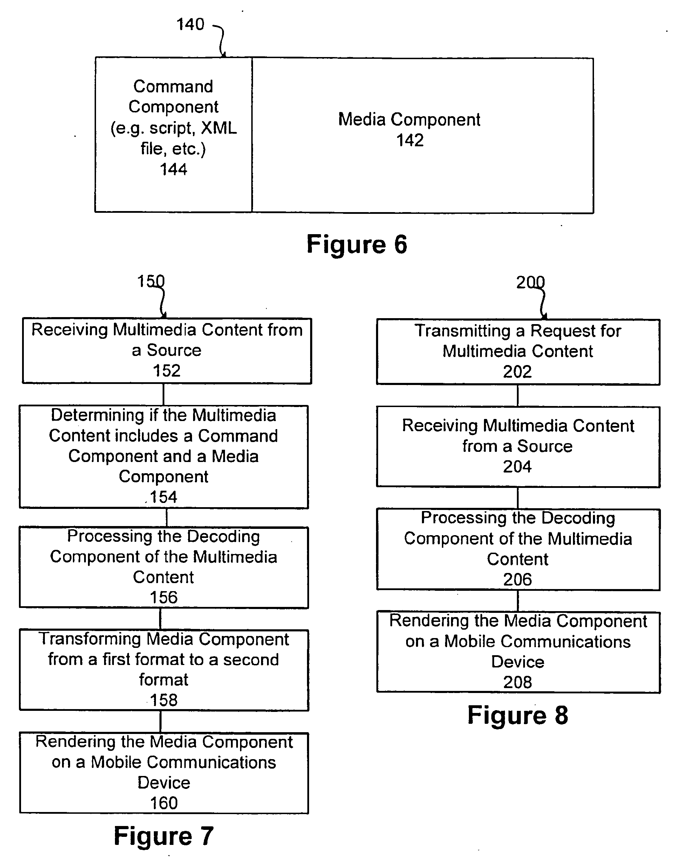

Referring to Figure 6, the multimedia content 140 is generally in the form of an electronic file having a media component 142 and a command component 144 (also referred to a decoding component). The media component 142 may be stored on the source (e.g., server 104) in any suitable format (e.g., MP3, MPEG-4, AAC, JPEG, etc.). As discussed below, the command component 144 is processed in the multimedia stack 26 based on operations and/or commands set forth in the command component 144. The command component 144 generally comprises a script including an ordered list of functions or primitives that must be executed by the mobile communications device 10 to transform the media component 142 from the first format to a second format for rendering the media component 142 on the mobile communications device 10.

In one embodiment, the script file includes code in an extensible markup language format for specifying at least one processing step for processing the media component 142 of the multimedia content 140 from the first format to a second format for rendering on the mobile communications device 10. The script file generally includes code in an extensible markup language format for specifying a plurality of processing steps for processing the media component of the multimedia content from the first format to a second format for rendering on the mobile communications device.

In another embodiment, an extensible markup language parser and/or an extensible markup language codec command translator parses and translates for execution a plurality of scripted commands and/or instructions to build a series of operations for processing the media component of the media content 142 from the first format to the second format for rendering on the mobile communications device 10.

In yet another embodiment, a java parser and/or a java codec command translator parses and translates for execution a plurality of scripted commands and/or instructions to build a series of operations for processing the media component 142 of the multimedia content 144 from the first format to the second format for rendering on the mobile communications device 10.

The computer application 128 may be logically associated with or call one or more additional computer applications or one or more sub-computer applications 130, which generally include compilations of executable code. In one embodiment, the computer application 128, and/or the sub-applications 130 are embodied as one or more computer programs (e.g., one or more software applications including compilations of executable code). The computer program(s) can be stored on a data storage medium or other computer readable medium, such as a magnetic or optical storage device (e.g., hard disk, CD-ROM, DVD-ROM, etc.).

To execute the computer application 128 and associated sub-applications 130, the content server 104 can include one or more processors 110 used to execute instructions that carry out a specified logic routine(s). Preferably, the content server 104 is based on a client - server architecture and may serve multiple clients. However, one of ordinary skill in the art will readily appreciate that any combination of computers having the functionality described herein shall be deemed to be within the scope of the present invention.

The content server 104 may have a memory 112 for storing data; software, logic routine instructions, computer programs, files, operating system instructions, multimedia content and the like. As illustrated in Figure 5, the computer application 128 and sub-applications 130 can be stored in the memory 112. The memory 112 can comprise several devices and includes, for example, volatile and non-volatile memory components. Accordingly, the memory 112 can include, for example, random access memory (RAM), read only memory (ROM), hard disks, floppy disks, compact disks (e.g., CD ROM, DVD ROM, CD RW, etc.), tapes, and/or other memory components, plus associated drives and players for these memory types. The processor 110, memory 112, and the data storage medium 114 are coupled using a local interface 116. The local interface 116 can be, for example, a data bus with accompanying control bus, a network, or other subsystem.

The content server 104 may have various video and input/output interfaces 118 as well as one or more communications interfaces 120. The interfaces 118 can be used to couple the content server 104 to various peripherals, such as a display 122 (e.g., a CRT display, an LCD display, a plasma display, etc.), a keyboard 124, and a user input device 126. The communications interfaces 120 can be comprised of, for example, a modem, a network interface card, and/or a wireless network interface card. The communications interfaces 130 can enable the content server 104 to transmit and receive network-based content via an external network, such as the Internet, a wide area network (WAN), a wireless wide area network (WWAN), a local area network (LAN), direct data link, or similar wired (e.g., Ethernet) or wireless system (e.g., 2G, 3G, 802.11-compliant protocols), as discussed above.

Referring to Figure 7, an exemplary method 150 for rendering multimedia content on a mobile communications device is illustrated. The method 150 includes at step 152, receiving multimedia content from an associated source. As stated above, the multimedia content 140 is generally in the form of an electronic file having a media component 142 and a command component 144. At step 154, a determination is made by one or more components of the mobile communications device that the multimedia content contains a command component 144 and a media component 142. One of ordinary skill in the art will readily appreciate that there are a variety of ways to determine if the multimedia content includes a media component 142 and a command component 144. For example, a sequence of one or more commands may be extracted from a script file included in the command component 144 using an Extensible Markup Language (XML) parser. A command may be then be applied to translate the sequence of commands extracted from the script file into a sequence of one or more elements that can be interpreted by a multimedia framework in the electronic device.

At step 156, the command component 144 is processed in the multimedia stack 26 based on operations and/or commands set forth in the command component 144. At step 158, the media component 142 is transformed from the first format to a second format based on one or more commands specified by the command component 144. At step 160, the media component 142 is rendered on the mobile communications device 10.

Referring to Figure 8, an exemplary method 200 for transmitting multimedia content 140 is illustrated. The method 200 includes, at step 202, transmitting a request for multimedia content 140 from a mobile communications device 10 to an associated source (e.g., a server). As stated above, the source (e.g., server 104) generally stores the multimedia content 140 in electronic format, wherein the multimedia content 140 includes a media component 142 stored in a first format and a command component 144. At step 204, the multimedia content 140 is received by the mobile communications device 10. At step 206, the command component 144 is processed in the multimedia stack 26 of the mobile communications device according to the command component 144 to process the media component 142 from the first format to a second format. At step 208, the media component 142 is rendered on the mobile communications device.

The methods and systems discussed above provide a variety of advantages. One advantage is that new media types can be supported prior to integration of a codec into the mobile device firmware and/or memory, provided that the decoder and/or post-processing functionality can be expressed as a combination of open source calls (e.g. OpenMAX AL) and/or open source primitives (e.g., OpenMAX DL primitives) when combined with the associated multimedia files. Another advantage is full decoding with public IP (e.g., full search motion compensation) or partial decoding can be done at the media sink with the intermediate file provided along with the remainder of the decoding steps needed to reach the final desired format. Theoretically, this approach could be used to avoid having specific vendor's intellectual property on a manufacturer's devices thereby providing for a reduction of licensing costs around multimedia algorithms. Another advantage is that proprietary code formats could be implemented and deployed easily and in a cost effective manner.

Specific embodiments of the invention are disclosed herein. One of ordinary skill in the art will readily recognize that the invention may have other applications in other environments. In fact, many embodiments and implementations are possible. The following claims are in no way intended to limit the scope of the present invention to the specific embodiments described above. In addition, any recitation of "means for" is intended to evoke a means-plus-function reading of an element and a claim, whereas, any elements that do not specifically use the recitation "means for", are not intended to be read as means-plus-function elements, even if the claim otherwise includes the word "means". It should also be noted that although the specification lists method steps occurring in a particular order, these steps may be executed in any order, or at the same time.

Computer program elements of the invention may be embodied in hardware and/or in software (including firmware, resident software, micro-code, etc.). The invention may take the form of a computer program product, which can be embodied by a computer-usable or computer-readable storage medium having computer-usable or computer-readable program instructions, "code" or a "computer program" embodied in the medium for use by or in connection with the instruction execution system. In the context of this document, a computer-usable or computer-readable medium may be any medium that can contain, store, communicate, propagate, or transport the program for use by or in connection with the instruction execution system, apparatus, or device. The computer-usable or computer-readable medium may be, for example but not limited to, an electronic, magnetic, optical, electromagnetic, infrared, or semiconductor system, apparatus, device, or propagation medium such as the Internet. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner. The computer program product and any software and hardware described herein form the various means for carrying out the functions of the invention in the example embodiments.

## Claims

1. A method for receiving multimedia content by an electronic device (10), the method comprising:
receiving multimedia content from an associated source;
determining that the multimedia content includes a command component (144) and a media component (142) expressed in a first format by extracting a sequence of one or more commands from a script file using an Extensible Markup Language (XML) parser and applying a command translator to translate the sequence of commands extracted from the script file into a sequence of one or more: elements that can be interpreted by a multimedia framework in the electronic device;
processing the command component in the electronic device to transform the media component from the first format to a second format by providing code included in the script file to an element plug-in receptacle of the multimedia framework if the script file includes code representing an implementation of at least one of the sequence of elements; and
rendering the media component in the second format on the electronic device or outputting the media component in the second format by the electronic device to a second electronic device.

2. The method of claim 1, wherein the electronic device (10) is a mobile communications device.

3. The method of any preceding claim further comprising storing the media component in the first format in a non-volatile memory (24) of the electronic device.

4. The method of any preceding claim further comprising storing the media component in the second format in a non-volatile memory (24) of the electronic device.

5. The method of any preceding claim, wherein the command component (144) is a script file comprising at least one command specifying a processing step for transforming the media component from the first format to the second format

6. The method of any preceding claim, wherein code representing an implementation of at least one element of a command is contained in the script file.

7. The method of any preceding claim, wherein the script file is in an Extensible Markup Language (XML) compatible format.

8. The method of any of claims 1-7, wherein the step of processing the command component further comprises the multimedia framework interpreting the sequence of one or more elements as a sequence of operations transforming the media component from the first format to the second format.

9. The method of any of claims 1-8, wherein the step of processing the command component further comprises the multimedia framework interpreting the sequence of one or more elements as a sequence of operations transforming the media component from the first format to the second format.

10. The method of any of claims 1-9 further including java-compatible code in the script file to an element plug-in receptacle of the multimedia framework for processing by a java parser and/or a java codec command translator for transforming the media component from first format to the second format.

11. A portable communications device comprising:
a non-volatile memory (24);
a multimedia stack (26) having a plurality of multimedia codecs for processing multimedia content stored in the non-volatile memory,
a processor (32) operable to determine if multimedia content received by the mobile telephone includes a command component (144) and a media component (142) expressed in a first format by extracting a sequence of one or more commands from a script file using an Extensible Markup Language (XML) parser and applying a command translator to translate the sequence of commands extracted from the script file into a sequence of one or more elements that can be interpreted by a multimedia framework in the electronic device and processing the command component of the multimedia content in the portable communications device to transform the media component from a first format to a second format suitable for rendering on the portable communications device by providing code included in the script file to an element plug-in receptacle of the multimedia stack if the script file includes code representing an implementation of at least one of the sequence of elements.

## Patentansprüche

1. Verfahren zum Empfangen von Multimedia-Inhalt durch ein elektronisches Gerät (10), das Verfahren umfassend:
Empfangen von Multimedia-Inhalt von einer zugehörigen Quelle;
Bestimmen, dass der Multimedia-Inhalt eine Befehlskomponente (144) und eine Media-Komponente (142) beinhaltet, die in einem ersten Format ausgedrückt ist,
durch extrahieren einer Sequenz von einem oder mehreren Befehlen von einer Skript-Datei unter Verwendung eines Extensible-Markup-Language-(XML)-Parsers und Anwenden eines Befehlsübersetzers, um die Sequenz von Befehlen,
die von der Skript-Datei extrahiert wird in eine Sequenz von einem oder mehreren Elementen zu übersetzen, die von einem Multimedia-Framework in dem elektronischen Gerät interpretiert werden können;
Verarbeiten der Befehlskomponente in dem elektronischen Gerät, um die Media-Komponente von dem ersten Format in ein zweites Format umzuwandeln, durch Bereitstellen eines Codes, der in der Skript-Datei beinhaltet ist, zu einem Element-Plug-in-Aufnahme des Multimedia-Frameworks, wenn die Skriptdatei Code beinhaltet, die eine Implementierung mindestens einer der Sequenz von Elementen repräsentiert; und
Rendern der Media-Komponente in dem zweiten Format auf dem elektronischen Gerät oder Ausgeben der Media-Komponente in dem zweiten Format durch das elektronische Gerät zu einem zweiten elektronischen Gerät.

2. Verfahren nach Anspruch 1, wobei das elektronische Gerät (10) ein Mobil-Kommunikationsgerät ist.

3. Verfahren nach einem der vorangegangenen Ansprüche, ferner umfassend Speichern der Media-Komponente in dem ersten Format, in einem nicht-flüchtigen Speicher (24) des elektronischen Geräts.

4. Verfahren nach einem der vorangegangenen Ansprüche, ferner umfassend Speichern der Media-Komponente in dem zweiten Format in einem nicht-flüchtigen Speicher (24) des elektronischen Geräts.

5. Verfahren nach einem der vorangegangenen Ansprüche, wobei die Befehlskomponente (144) eine Skript-Datei ist, die mindestens einen Befehl umfasst, der einen Verarbeitungsschritt zum Umwandeln der Media-Komponente von dem ersten Format in das zweite Format spezifiziert.

6. Verfahren nach einem der vorangegangenen Ansprüche, wobei der Code, der eine Implementierung mindestens eines Elements eines Befehls repräsentiert, in der Skript-Datei enthalten ist.

7. Verfahren nach einem der vorangegangenen Ansprüche, wobei die Skript-Datei in einem Extensible-Markup-Language (XML) kompatiblen Format ist.

8. Verfahren nach einem der Ansprüche 1 bis 7, wobei der Schritt des Verarbeitens der Befehlskomponente ferner umfasst, dass das Multimedia-Framework die Sequenz von einem oder mehreren Elementen als eine Sequenz von Operationen interpretiert, die die Media-Komponente von dem ersten Format in das zweite Format umwandelt.

9. Verfahren nach einem der Ansprüche 1 bis 8, wobei der Schritt des Verarbeitens der Befehlskomponente ferner umfasst, dass das Multimedia-Framework die Sequenz von einem oder mehreren Elementen als eine Sequenz von Operationen interpretiert, die die Media-Komponente von dem ersten Format in das zweite Format umwandelt.

10. Verfahren nach einem der Ansprüche 1 bis 9, ferner beinhaltend Java-kompatiblen Code in der Skript-Datei zu einem Element-Plug-in-Aufnahme des Multimedia-Frameworks zum Verarbeiten durch einen Java-Parser und/oder einen Java-Codebefehl-Übersetzer zum Umwandeln der Media-Komponente vom erste Format in das zweite Format.

11. Tragbares Kommunikationsgerät, umfassend:
einen nicht-flüchtigen Speicher (24);
einen Multimedia-Stapel (26), der eine Vielzahl von Multimedia-Codecs zum Verarbeiten von Multimedia-Inhalten in dem nicht-flüchtigen Speicher gespeichert hat,
einen Prozessor (32), betreibbar um zu bestimmen, ob Multimedia-Inhalt, der durch das Mobiltelefon empfangen wird, eine Befehlskomponente (144) und eine Media-Komponente (142) beinhaltet, die in einem ersten Format ausgedrückt ist, durch Extrahieren einer Sequenz von einem oder mehreren Befehlen von einer Skript-Datei unter Verwendung eines Extensible-Markup-Language-(XML)-Parsers und Anwenden eines Befehlsübersetzers, um die Sequenz von Befehlen, die von der Skript-Datei extrahiert werden, in eine Sequenz von einem oder mehreren Elementen zu übersetzen, die von einem Multimedia-Framework des elektronischen Geräts interpretiert werden können und Verarbeiten der Befehlskomponente des Multimedia-Inhalts in dem tragbaren Kommunikationsgerät, um die Media-Komponente von einem ersten Format in ein zweites Format umzuwandeln, das zum Rendern auf dem tragbaren Kommunikationsgerät geeignet ist, durch Bereitstellen von Code, der in der Skript-Datei beinhaltet ist, zu einem Element-Plug-in-Aufnahme des Multimedia-Stapels, wenn die Skript-Datei Code beinhaltet, der eine Implementierung von mindestens einer Sequenz von Elementen repräsentiert.

## Revendications

1. Procédé de réception de contenu multimédia par un dispositif électronique (10), le procédé comprenant le fait :
de recevoir du contenu multimédia d'une source associée ;
de déterminer que le contenu multimédia comporte un composant d'instructions (144) et un composant média (142) exprimé en un premier format en extrayant une séquence d'une ou de plusieurs instructions à partir d'un fichier de script en utilisant un analyseur de Langage de Marquage Extensible (XML) et en appliquant un traducteur d'instructions pour traduire la séquence d'instructions extraites du fichier de script en une séquence d'un ou de plusieurs éléments qui peuvent être interprétés par un cadre multimédia dans le dispositif électronique ;
de traiter le composant d'instructions dans le dispositif électronique afin de transformer le composant média du premier format en un second format en prévoyant un code inclus dans le fichier de script à un réceptacle de plugiciels d'élément du cadre multimédia si le fichier de script comporte un code représentant une implémentation d'au moins l'un de la séquence d'éléments ; et
de rendre le composant média au second format sur le dispositif électronique ou délivrer en sortie le composant média au second format par le dispositif électronique à un second dispositif électronique.

2. Procédé de la revendication 1, dans lequel le dispositif électronique (10) est un dispositif de communications mobiles.

3. Procédé de l'une quelconque des revendications précédentes comprenant en outre le fait de stocker le composant média au premier format dans une mémoire non volatile (24) du dispositif électronique.

4. Procédé de l'une quelconque des revendications précédentes comprenant en outre le fait de stocker le composant média au second format dans une mémoire non volatile (24) du dispositif électronique.

5. Procédé de l'une quelconque des revendications précédentes, dans lequel le composant d'instructions (144) est un fichier de script comprenant au moins une instruction spécifiant une étape de traitement pour transformer le composant média du premier format au second format.

6. Procédé de l'une quelconque des revendications précédentes, dans lequel un code représentant une implémentation d'au moins un élément d'une instruction est contenu dans le fichier de script.

7. Procédé de l'une quelconque des revendications précédentes, dans lequel le fichier de script se trouve sous un format compatible avec le Langage de Marquage Extensible (XML).

8. Procédé de l'une quelconque des revendications 1-7, dans lequel l'étape de traitement du composant d'instructions comprend en outre le fait que le cadre multimédia interprète la séquence d'un ou de plusieurs éléments comme une séquence d'opérations transformant le composant média du premier format au second format.

9. Procédé de l'une quelconque des revendications 1-8, dans lequel l'étape de traitement du composant d'instructions comprend en outre le fait que le cadre multimédia interprète la séquence d'un ou de plusieurs éléments comme une séquence d'opérations transformant le composant média du premier format au second format.

10. Procédé de l'une quelconque des revendications 1-9 comprenant en outre un code java-compatible dans le fichier de script à un réceptacle de plugiciels d'élément du cadre multimédia pour traitement par un analyseur java et/ou un traducteur d'instructions codec java pour transformer le composant média du premier format au second format.

11. Dispositif de communications portable comprenant:
une mémoire non volatile (24) ;
un empilement multimédia (26) ayant une pluralité de codecs multimédia pour le traitement de contenu multimédia stocké dans la mémoire non volatile,
un processeur (32) pouvant fonctionner pour déterminer si du contenu multimédia reçu par le téléphone mobile comporte un composant d'instructions (144) et un composant média (142) exprimé en un premier format en extrayant une séquence d'une ou de plusieurs instructions à partir d'un fichier de script en utilisant un analyseur de Langage de Marquage Extensible (XML) et en appliquant un traducteur d'instructions pour traduire la séquence d'instructions extraites du fichier de script en une séquence d'un ou de plusieurs éléments qui peuvent être interprétés par un cadre multimédia dans le dispositif électronique et traiter le composant d'instructions du contenu multimédia dans le dispositif de communications portable afin de transformer le composant média d'un premier format en un second format approprié pour rendre sur le dispositif de communications portable en prévoyant un code inclus dans le fichier de script à un réceptacle de plugiciels d'élément de l'empilement multimédia si le fichier de script comporte un code représentant une implémentation d'au moins l'un de la séquence d'éléments.
